# EUROPEAN PATENT SPECIFICATION

(11) **EP 4 504 469 B1**
(45) Date of publication and mention of the grant of the patent: **18.06.2025**
(21) Application number: 23710851.9
(22) Date of filing: 09.03.2023
(51) Int. Cl.: B27N 3/14, B29C 43/40, B30B 9/28, B31B 50/20, B26D 7/26, B26F 1/44, B27N 5/00, B27N 3/18, B27N 3/20, B27N 5/02, B29C 33/12, B29C 39/30, B29C 43/00, B29C 45/14

(54) **A DRY-FORMING MOULD SYSTEM AND A METHOD FOR MANUFACTURING A CELLULOSE PRODUCT IN A DRY-FORMING MOULD SYSTEM**
TROCKENFORMSYSTEM UND VERFAHREN ZUR HERSTELLUNG EINES ZELLULOSEPRODUKTS IN EINEM TROCKENFORMSYSTEM
SYSTÈME DE MOULE DE FORMATION À SEC ET PROCÉDÉ DE FABRICATION D'UN PRODUIT DE CELLULOSE DANS UN SYSTÈME DE MOULE DE FORMATION À SEC

(30) Priority: 08.04.2022 SE 2250445
(43) Date of publication of application: 12.02.2025
(73) Proprietor: PulPac AB, 421 31 Västra Frölunda (SE)
(72) Inventor: HÖGBLOM, Olle, 412 59 Göteborg (SE); BERGFJORD, Mathias, 416 48 Göteborg (SE); EKSTRAND, Niklas, 443 50 Lerum (SE); SJÖSTRAND JONSSON, Felix, 414 66 Göteborg (SE); ARLEROT, Björn, 413 20 Göteborg (SE)
(74) Representative: Zacco Sweden AB
(86) International application number: PCT/EP2023/055995
(87) International publication number: WO 2023/194032

(56) References cited:
- WO-A1-2010/013531
- WO-A1-2022/043225
- US-A1- 2009 304 960
- US-A1- 2015 102 517

## Description

### TECHNICAL FIELD

The present disclosure relates to a dry-forming mould system, where the dry-forming mould system is adapted for forming and cutting out a cellulose product from an air-formed cellulose blank structure. The dry-forming mould system comprises a first mould part and a second mould part arranged for cooperating with each other. The disclosure further relates to a method for manufacturing a cellulose product in a dry-forming mould system.

### BACKGROUND

Cellulose fibres are often used as raw material for producing or manufacturing products. Products formed of cellulose fibres can be used in many different situations where there is a need for having sustainable products. A wide range of products can be produced from cellulose fibres and a few examples are disposable plates and cups, cutlery, lids, bottle caps, coffee pods, hangers, and packaging materials.

Forming moulds are commonly used when manufacturing cellulose products from raw materials including cellulose fibres, and traditionally the cellulose products have been produced with wet-forming techniques. A material commonly used for wet-forming cellulose fibre products is wet moulded pulp. Wet moulded pulp has the advantage of being considered as a sustainable packaging material, since it is produced from biomaterials and can be recycled after use. Consequently, wet moulded pulp has been quickly increasing in popularity for different applications. Wet moulded pulp articles are generally formed by immersing a suction forming mould into a liquid or semi liquid pulp suspension or slurry comprising cellulose fibres, and when suction is applied, a body of pulp is formed with the shape of the desired product by fibre deposition onto the forming mould. With all wet-forming techniques, there is a need for high amounts of water and then drying of the wet moulded product, where the drying is a very time and energy consuming part of the production and water is becoming a scarce resource. The demands on aesthetical, chemical and mechanical properties of cellulose products are increasing, and due to the properties of wet-formed cellulose products, the mechanical strength, flexibility, freedom in material thickness, and chemical properties are limited. It is also difficult in wet-forming processes to control the mechanical properties of the products with high precision. One development in the field of producing cellulose products is the forming of cellulose products from cellulose fibres without using wet-forming techniques. Instead, an air-formed cellulose blank structure is used for dry-forming the cellulose product in a dry-forming mould system. Through the dry-forming process, the cellulose product is formed into a dry moulded fibre (DMF) structure. The air-formed cellulose blank structure is inserted into a forming mould and during the forming of the cellulose products, the cellulose blank structure is subjected to a high forming pressure and a high forming temperature. When using this dry-forming process, an edge structure of the cellulose product needs to be formed, and commonly a cutting tool arranged as a part of the forming mould is used. When forming the cellulose products, the cutting tool will naturally blunt with regular use over time, and therefore the forming mould used has a limited life span. Changing the forming mould is a time consuming and costly operation.

There is thus a need for an improved dry-forming mould system and method for manufacturing a cellulose product in a dry-forming mould system.

US2009/304960A1 discloses a method of forming a multilayer container in which a container body is formed by means of moulding from a multilayer structure including a plurality of laminated resin layers at least one of which is in a fused state, and simultaneously, a peripheral edge portion of the container body of the multilayer structure is cut with a predetermined width so as to form a flange portion.

### SUMMARY

An object of the present disclosure is to provide a dry-forming mould system and a method for dry-forming a cellulose product in a dry-forming mould system, where the previously mentioned problems are avoided. This object is at least partly achieved by the features of the independent claims. The dependent claims contain further developments of the dry-forming mould system and the method for dry-forming a cellulose product in a dry-forming mould system.

The disclosure concerns a dry-forming mould system for dry-forming a cellulose product from an air-formed cellulose blank structure. The dry-forming mould system comprises a first mould part and an opposing second mould part configured for cooperating with each other in a pressing direction upon forming of the cellulose product. The first mould part and the second mould part are configured for being pressed together in the pressing direction in a first pressing stroke to apply a forming pressure onto the cellulose blank structure. A flexible cutting element with a cutting edge configured for operating in the pressing direction is releasably attached to the first mould part, and the second mould part comprises an anvil plate arranged to cooperate with the cutting edge of the flexible cutting element. The flexible cutting element is configured for cutting out the cellulose product from the cellulose blank structure by pressing the cutting edge towards and in contact with the anvil plate with a predetermined cutting force, simultaneously with the first pressing stroke or in a second pressing stroke in the pressing direction after start of the first pressing stroke.

Advantages with these features are that the system is providing a releasably attached flexible cutting element for efficient cutting operations, where cellulose products are cut out from the cellulose blank structure. The flexible cutting element can be removed from the first mould part and exchanged for a new or sharpened flexible cutting element. The solution is increasing the life span of the mould parts, and is enabling a fast and low-cost exchange of cutting elements. The flexible cutting element is made of a material that is allowed to flex in order to adapt the shape of the flexible cutting element to a desired shape. The flexible cutting element is made from a material that is bendable without breaking when being shaped. With such a configuration, the flexible cutting element can be bent into the desired shape of the outer peripheral edge of the cellulose products. Suitable materials for the flexible cutting element are for example steel or other suitable metals or metallic materials.

In one embodiment, the cutting edge has an extension and shape in a first plane perpendicular to the pressing direction corresponding to an outer peripheral edge of the cellulose product.

In one embodiment, the flexible cutting element has a configuration with one structural section in a lateral direction, or two or more structural sections arranged in connection to each other in a lateral direction, where the lateral direction is perpendicular to the pressing direction. By using one, two or more structural sections, the characteristics of the flexible cutting element can be efficiently designed, such as for example bending strength or material stiffness.

In one embodiment, the flexible cutting element is movably arranged in the pressing direction relative to the first mould part. By the movable arrangement of the flexible cutting element, the second pressing stroke is enabled for an efficient cutting operation of the cellulose products from the cellulose blank structure.

In one embodiment, the flexible cutting element extends along an outer peripheral edge section of the first mould part. With this configuration, a simple deign of the system is achieved, where the flexible cutting element is easily attached to and removed from the first mould part.

In one embodiment, the flexible cutting element is arranged in a groove of the first mould part. The groove has an extension in the pressing direction and comprises a groove opening facing the second mould part. The groove is providing an alternative solution for efficient cutting operations.

In one embodiment, the flexible cutting element is releasably attached to the first mould part by means of one or more fastening elements. The fastening elements may be arranged as one or more screws that are holding the flexible cutting element in position relative to the first mould part. The screws may engage threaded holes in the first mould part for attaching the flexible cutting element to the first mould part. However, any suitable fastening elements may be used, such as for example clamping members. By removing the fastening elements, the cutting element can be easily removed from the first mould part. Once removed from the first mould part, a new or a sharpened cutting element can be attached to the first mould part and held in position by the fastening elements.

In one embodiment, the flexible cutting element is releasably attached to the first mould part via one or more spring elements. The spring elements are used for efficiently controlling the predetermined cutting force. By choosing suitable spring characteristics, the predetermined cutting force can be adapted to the specific dry-forming mould system.

In one embodiment, the anvil plate comprises a material being softer than the cutting edge. By using a softer material, the cutting edge may be pressed at the predetermined cutting force in contact with the anvil plate in an initial cutting step in which the cutting edge is pressed against the anvil plate for a first time. The initial cutting step is used for deforming at least a part of the softer material of the anvil plate, such that the cutting edge exerts an even cutting pressure onto the anvil plate. The deformation of the softer material of the anvil plate is enabling an even cutting pressure distribution from the cutting edge onto the anvil plate in following pressing operations after the initial cutting step for an efficient cutting operation with high precision.

In one embodiment, the second mould part comprises a spring member configured to support the anvil plate. The spring member is controlling the cutting force, and the spring member may be used for releasing the anvil plate in the pressing direction when a predetermined release force acting on the spring member is reached. The spring member is efficiently controlling the predetermined cutting force. By choosing suitable spring characteristics, the predetermined cutting force can be adapted to the specific dry-forming mould system. Through the releasing function, the cutting operation can be terminated when the predetermined release force acting on the spring member is reached.

In one embodiment, the second mould part comprises a spring member configured to support the second mould part. The spring member is controlling the cutting force, and the spring member may be used for releasing the second mould part in the pressing direction when a predetermined release force acting on the spring member is reached. The spring member is efficiently controlling the predetermined cutting force. By choosing suitable spring characteristics, the predetermined cutting force can be adapted to the specific dry-forming mould system. Through the releasing function, the cutting operation can be terminated when the predetermined release force acting on the spring member is reached.

In one embodiment, the flexible cutting element comprises an edge portion opposite the cutting edge, wherein the first mould part comprises a backing plate with a deformable material structure connected to the edge portion. The deformable material structure is used for an even pressure distribution between the cutting edge and the anvil plate. When the cutting edge is pressed at the predetermined cutting force in contact with the anvil plate in an initial cutting step in which the cutting edge is pressed against the anvil plate for a first time, at least a part of the backing plate is deformed by pressure from the edge portion upon pressing of the cutting edge in contact with the anvil plate, such that the cutting edge exerts an even cutting pressure onto the anvil plate. By using a deformable material, the edge portion is deforming the deformable material structure when the cutting edge is pressed at the predetermined cutting force in contact with the anvil plate in the initial cutting step. The initial cutting step is thus used for deforming at least a part of the backing plate, such that the cutting edge exerts an even cutting pressure onto the anvil plate. The deformation of the deformable material structure is enabling an even pressure distribution by the cutting edge onto the anvil plate in following pressing operations after the initial cutting step.

The disclosure further concerns a method for dry-forming a cellulose product in a dry-forming mould system from an air-formed cellulose blank structure. The dry-forming mould system comprises a first mould part and an opposing second mould part arranged to cooperate with each other in a pressing direction upon forming of the cellulose product. A flexible cutting element with a cutting edge operating in the pressing direction is releasably attached to the first mould part, and the second mould part comprises an anvil plate arranged to cooperate with the cutting edge of the flexible cutting element. The method comprises the steps: providing the air-formed cellulose blank structure, and arranging the cellulose blank structure between the first mould part and the second mould part; forming the cellulose product by pressing together the first mould part and the second mould part in a first pressing stroke in the pressing direction, wherein a forming pressure is applied onto the cellulose blank structure; cutting out the cellulose product from the cellulose blank structure by pressing the cutting edge towards and in contact with the anvil plate with a predetermined cutting force; wherein the cutting edge is pressed towards and in contact with the anvil plate simultaneously with the first pressing stroke, or wherein the cutting edge is pressed towards and in contact with the anvil plate in a second pressing stroke in the pressing direction after start of the first pressing stroke.

Advantages with these features are that the method is providing an efficient cutting operation when cutting out the cellulose products from the cellulose blank structure. The flexible cutting element is releasably attached to the first mould part for efficient cutting operations, and the flexible cutting element can be easily removed from the first mould part and exchanged for a new or sharpened flexible cutting element. The solution is increasing the life span of the mould parts, and is enabling a fast and low-cost exchange of cutting elements. The flexible cutting element is made of a material that is allowed to flex in order to adapt the shape of the flexible cutting element to the shape of an outer peripheral edge of the cellulose products to be cut out from the cellulose blank structure.

In one embodiment, the forming pressure is in the range of 1-100 MPa, preferably in the range of 4-20 MPa, and the predetermined cutting force is in the range of 5-100 N/mm, preferably in the range of 10-50 N/mm. These parameters are providing efficient forming and cutting operations when producing cellulose products in the dry-forming mould system.

In one embodiment, the flexible cutting element is releasably attached to the first mould part via one or more spring elements. The method further comprises the step: establishing the predetermined cutting force by the one or more spring elements when pressing the cutting edge in contact with the anvil plate. The spring elements are efficiently controlling the predetermined cutting force. By choosing suitable spring characteristics, the predetermined cutting force can be adapted to the specific dry-forming mould system.

In one embodiment, the method further comprises the step: pressing the cutting edge in contact with the anvil plate and controlling the predetermined cutting force by the one or more spring elements.

In one embodiment, the flexible cutting element is releasably attached to the one or more spring elements, wherein the one or more spring elements are configured to control the predetermined cutting force. The method further comprises the step: releasing the flexible cutting element in a direction opposite the pressing direction when a predetermined release force acting on the one or more spring elements is reached. Through the releasing function, the cutting operation can be terminated when the predetermined release force acting on the one or more spring elements is reached.

In one embodiment, the flexible cutting element is movably arranged in the pressing direction relative to the first mould part. The method further comprises the step: establishing the predetermined cutting force when pressing the cutting edge towards and in contact with the anvil plate upon movement of the flexible cutting element relative to the first mould part. By the movable arrangement of the flexible cutting element, the second pressing stroke is enabled for an efficient cutting operation of the cellulose products from the cellulose blank structure.

In one embodiment, the method further comprises the steps: pressing the cutting edge towards and in contact with the anvil plate with the predetermined cutting force simultaneously with the first pressing stroke, and continue pressing the cutting edge at the predetermined cutting force in contact with the anvil plate when the first pressing stroke is completed. With this configuration, the first mould part may be separated from the second mould part with a continued predetermined cutting force applied, where the cutting edge is pressed towards and in contact with the anvil plate.

In one embodiment, the method further comprises the step: pressing the cutting edge in contact with the anvil plate with the predetermined cutting force simultaneously with applying the forming pressure onto the cellulose blank structure. This method step is enabling fast and efficient simultaneous product forming and cutting operations.

In one embodiment, the method further comprises the steps: pressing the cutting edge in contact with the anvil plate with the predetermined cutting force in the second pressing stroke by use of a pressure member pressing onto the flexible cutting element in the pressing direction, when or after the first pressing stroke is completed. The pressure member is establishing the cutting force for cutting out the cellulose products from the cellulose blank structure. The pressure member may be arranged as an electric, pneumatic or hydraulic actuator that is pressing the cutting edge in contact with the anvil plate.

In one embodiment, the anvil plate comprises a material being softer than the cutting edge. The method further comprises the steps: pressing the cutting edge at the predetermined cutting force in contact with the anvil plate in an initial cutting step in which the cutting edge is pressed against the anvil plate for a first time, wherein at least a part of the softer material of the anvil plate is deformed such that the cutting edge exerts an even cutting pressure onto the anvil plate. By using a softer material, the cutting edge may be pressed at the predetermined cutting force in contact with the anvil plate in the initial cutting step, and the initial cutting step is used for deforming at least a part of the softer material of the anvil plate, such that the cutting edge exerts an even cutting pressure onto the anvil plate. The deformation of the softer material of the anvil plate is enabling an even cutting pressure from the cutting edge onto the anvil plate in following pressing operations after the initial cutting step.

In one embodiment, the second mould part comprises a spring member configured to support the anvil plate. The method further comprises the step: releasing the anvil plate in the pressing direction when a predetermined release force acting on the spring member is reached. The spring member is efficiently controlling the predetermined cutting force, and the predetermined cutting force can be adapted to the specific dry-forming mould system by choosing suitable spring characteristics. The releasing function is enabling termination of the cutting operation when the predetermined release force acting on the spring member is reached.

In one embodiment, the second mould part comprises a spring member configured to support the second mould part. The method further comprises the step: releasing the second mould part in the pressing direction when a predetermined release force acting on the spring member is reached. The spring member is efficiently controlling the predetermined cutting force, and the predetermined cutting force can be adapted to the specific dry-forming mould system by choosing suitable spring characteristics. The releasing function is enabling termination of the cutting operation when the predetermined release force acting on the spring member is reached.

In one embodiment, the method further comprises the step: releasing the first mould part and the second mould part from to each other after cutting out the cellulose product for removing the cellulose product from the dry-forming mould system. The releasing of the mould parts is enabling efficient removal of the formed cellulose products from the dry-forming mould system.

In one embodiment, the flexible cutting element comprises an edge portion opposite the cutting edge, and the first mould part comprises a backing plate with a deformable material structure connected to the edge portion. The method comprises the steps: pressing the cutting edge at the predetermined cutting force in contact with the anvil plate in an initial cutting step in which the cutting edge is pressed against the anvil plate for a first time, wherein at least a part of the backing plate is deformed by pressure from the edge portion upon pressing of the cutting edge in contact with the anvil plate such that the cutting edge exerts an even cutting pressure onto the anvil plate. When the cutting edge is pressed at the predetermined cutting force in contact with the anvil plate in the initial cutting step, at least a part of the backing plate is deformed by pressure from the edge portion upon pressing of the cutting edge in contact with the anvil plate, such that the cutting edge exerts an even cutting pressure onto the anvil plate. By using a deformable material, the edge portion is deforming the deformable material structure when the cutting edge is pressed at the predetermined cutting force in contact with the anvil plate in the initial cutting step. The initial cutting step is thus used for deforming at least a part of the backing plate, such that the cutting edge exerts an even cutting pressure onto the anvil plate. The deformation of the deformable material structure is enabling an even pressure distribution by the cutting edge onto the anvil plate in following pressing operations after the initial cutting step.

### BRIEF DESCRIPTION OF DRAWINGS

The disclosure will be described in detail in the following, with reference to the attached drawings, in which
- Fig. 1a-c: show schematically, in side views, a dry-forming mould system with mould parts according to an embodiment,
- Fig. 2a-e: show schematically, in cross-sectional side views, interacting mould parts and flexible cutting element according to embodiments,
- Fig. 3a-d: show schematically, in cross-sectional side views, interacting mould parts and flexible cutting element according to alternative embodiments,
- Fig. 4a-b: show schematically, in cross-sectional side views, interacting mould parts and flexible cutting element according to an alternative embodiment,
- Fig. 5a-d: show schematically, in cross-sectional side views, interacting mould parts and flexible cutting element according to an alternative embodiment,
- Fig. 6a-b: show schematically, in cross-sectional side views, interacting mould parts and flexible cutting element according to an alternative embodiment,
- Fig. 7a-b: show schematically, in cross-sectional side views, interacting mould parts and flexible cutting element according to an alternative embodiment,
- Fig. 8: shows schematically, in a cross-sectional side view, interacting mould parts and flexible cutting element according to an alternative embodiment,
- Fig. 9a-c: show schematically, in a view from below, in a side view, and in a perspective view, the flexible cutting element according to an embodiment,
- Fig. 10a-c: show schematically, in cross-sectional side views, the flexible cutting element according to alternative embodiments, and
- Fig. 11a-e: show schematically, in cross-sectional side views, the flexible cutting element according to alternative embodiments.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

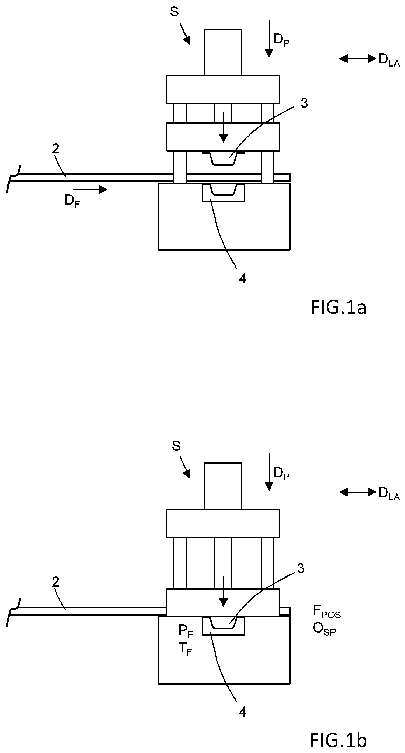

Figures 1a-c schematically show a dry-forming mould system S for dry-forming cellulose products 1 from an air-formed cellulose blank structure 2 into a dry moulded fibre (DMF) structure. The dry-forming mould system S comprises a first mould part 3 and an opposing second mould part 4 configured for interacting and cooperating with each other in a pressing direction D_{P} of the dry-forming mould system S for forming the cellulose products 1 from the air-formed cellulose blank structure 2. The first mould part 3 and/or the second mould part 4 are movably arranged relative to each other in the pressing direction D_{P}. A direction perpendicular to the pressing direction is defined as a lateral direction D_{LA} of the dry-forming mould system S, as shown in figures 1a-c.

With an air-formed cellulose blank structure 2 is meant an essentially air-formed fibrous web structure produced from cellulose fibres. The cellulose fibres may originate from a suitable cellulose raw material, such as a pulp material. Suitable pulp materials are for example fluff pulp, paper structures, or other cellulose fibre containing structures. The cellulose fibres may also be extracted from agricultural waste materials, for example wheat straws, fruit and vegetable peels, bagasse, etc. With air-forming of the cellulose blank structure 2 is meant the formation of a cellulose blank structure in a dry forming process in which the cellulose fibres are air-formed to produce the cellulose blank structure 2. When forming the cellulose blank structure 2 in the air-forming process, the cellulose fibres are carried and formed to the fibre blank structure 2 by air as carrying medium. This is different from a normal papermaking process or a traditional wet-forming process, where water is used as carrying medium for the cellulose fibres when forming the paper or fibre structure. In the air-forming process, small amounts of water or other substances may if desired be added to the cellulose fibres in order to change the properties of the cellulose products, but air is still used as carrying medium in the forming process. The cellulose blank structure 2 may, if suitable have a dryness that is mainly corresponding to the ambient humidity in the atmosphere surrounding the air-formed cellulose blank structure 2. As an alternative, the dryness of the cellulose blank structure 2 can be controlled in order to have a suitable dryness level when forming the cellulose products 1.

The air-formed cellulose blank structure 2 may be formed of cellulose fibres in a conventional air-forming process or in a cellulose blank air-forming module. For example, the cellulose blank structure 2 may have a composition where the fibres are of the same origin or alternatively contain a mix of two or more types of cellulose fibres, depending on the desired properties of the cellulose products 1. The cellulose fibres used in the cellulose blank structure 2 are during the forming process of the cellulose products 1 strongly bonded to each other with hydrogen bonds, due to applied forming pressure and forming temperature together with adequate moist content in the cellulose blank structure 2. The cellulose fibres may be mixed with other substances or compounds to a certain amount as will be further described below. With cellulose fibres is meant any type of cellulose fibres, such as natural cellulose fibres or manufactured cellulose fibres. The cellulose blank structure 2 may specifically comprise at least 95% cellulose fibres, or more specifically at least 99% cellulose fibres.

The air-formed cellulose blank structure 2 may have a single-layer or a multi-layer configuration. A cellulose blank structure 2 having a single-layer configuration is referring to a structure that is formed of one layer containing cellulose fibres. A cellulose blank structure 2 having a multi-layer configuration is referring to a structure that is formed of two or more layers comprising cellulose fibres, where the layers may have the same or different compositions or configurations.

The cellulose blank structure 2 may comprise one or more additional cellulose layers comprising cellulose fibres, where an additional cellulose layer for example is arranged as a carrying layer for one or more other layers of the cellulose blank structure 2. The one or more additional cellulose layers may act as reinforcement layers having a higher tensile strength than other layers of the cellulose blank structure 2. This is useful when one or more air-formed layers of the cellulose blank structure 2 have compositions with low tensile strength in order to avoid that the cellulose blank structure 2 will break during the forming of the cellulose products 1. The one or more additional cellulose layers with higher tensile strength act in this way as a supporting structure for other layers of the cellulose blank structure 2. The one or more additional cellulose layers may be of a different composition than the rest of the cellulose blank structure 2, such as for example a tissue layer containing cellulose fibres, an airlaid structure comprising cellulose fibres, or other suitable layer structures. It is thus not necessary that the one or more additional cellulose layers are air-formed. Other suitable additional layers may also be used such as for example silicone coated structures or bio-based films.

The one or more air-formed layers of the cellulose blank structure 2 are fluffy and airy structures, where the cellulose fibres forming the structures are arranged relatively loosely in relation to each other. The fluffy cellulose blank structures 2 are used for an efficient dry-forming of the cellulose products 1, allowing the cellulose fibres to form the cellulose products 1 in an efficient way during the dry-forming process in the dry-forming mould system S.

To form the cellulose products 1 from the cellulose blank structure 2 in the dry-forming mould system S, the cellulose blank structure 2 is first provided from a suitable source. The cellulose blank structure 2 may be air-formed from cellulose fibres and arranged on rolls or in stacks. The rolls or stacks may thereafter be arranged in connection to the dry-forming mould system S. As an alternative, the cellulose blank structure 2 may be air-formed from cellulose fibres in a cellulose blank air-forming module arranged in connection to the dry-forming mould system S, and directly fed to the dry-forming mould system S after the air-forming operation. The cellulose blank structure 2 is fed to the dry-forming mould system S with suitable non-illustrated transportation means, such as forming wires, vacuum belt feeders, or conveyor belts.

The dry-forming mould system S comprises one or more oppositely arranged pairs of first mould parts 3 and second mould parts 4, and the mould parts are configured for dry-forming the cellulose products 1 from the cellulose blank structure 2. The dry-forming mould system S may be arranged with only one pair of first mould part 3 and opposing second mould part 4 in a single-cavity configuration, or alternatively with two or more pairs of first mould parts and opposing second mould parts in a multi-cavity configuration. A single-cavity configuration dry-forming mould system thus comprises only one forming mould structure with a first mould part 3 and a cooperating second mould part 4. A multi-cavity configuration dry-forming mould system comprises two or more forming mould structures, each having cooperating first mould parts 3 and second mould parts 4.

In the embodiment illustrated in figures 1a-c, the dry-forming mould system S is arranged as a single-cavity configuration dry-forming mould system S comprising one forming mould structure with a first mould part 3 and a second mould part 4 movably arranged relative to each other. In the following, the dry-forming mould system S will be described in connection to a single-cavity configuration dry-forming mould system, but the disclosure is equally applicable on a multi-cavity configuration dry-forming mould system.

The dry-forming mould system S may for example be constructed so that the first mould part 3 or the second mould part 4 is movable and arranged to move towards the other mould part during the dry-forming process, where the other mould part is stationary or non-movably arranged. In the embodiment illustrated in figures 1a-c, the first mould part 3 is movably arranged and the second mould part 4 is stationary. In an alternative non-illustrated embodiment, both the first mould part 3 and the second mould part 4 are movably arranged, where the first mould part 3 and the second mould part 4 are displaced in directions towards each other during the dry-forming process. The moving mould parts may be displaced with a suitable actuator, such as a hydraulic, pneumatic, or electric actuator. A combination of different actuators may also be used. The relative speed between the first mould part 3 and the second mould part 4 during the dry-forming process is suitably chosen so that the cellulose blank structure 2 is evenly distributed in a forming cavity between the mould parts during the dry-forming process.

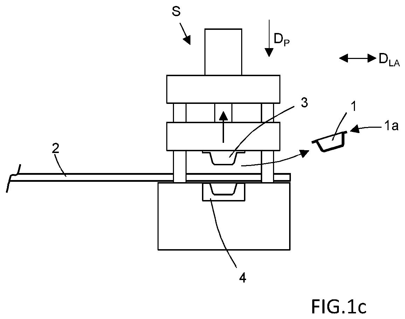

As indicated in figure 1a, the first mould part 3 is movably arranged in relation to the second mould part 4 in the pressing direction D_{P} and the first mould part 3 is further arranged to be pressed towards the second mould part 4 in the pressing direction D_{P} during dry-forming of the cellulose products 1 for establishing a forming pressure P_{F} onto the cellulose blank structure 2. When dry-forming the cellulose products 1, the cellulose blank structure 2 is transported in a feeding direction D_{F} and arranged between the first mould part 3 and the second mould part 4 when the mould parts are in an open state, as shown in figure 1a. Suitably, the cellulose blank structure 2 is fed intermittently to the mould parts. When the cellulose blank structure 2 has been arranged between the first mould part 3 and the second mould part 4, the first mould part 3 is moved towards the second mould part 4 during the dry-forming process. When the forming pressure P_{F} together with a suitable forming temperature T_{F} are established by the mould parts onto the cellulose blank structure 2, the movement of the first mould part 3 is stopped in a product forming position F_{POS}, as shown in figure 1b. The first mould part 3 is thereafter moved in a direction opposite the pressing direction D_{P} away from the second mould part 4 after a certain time duration or directly after the first mould part 3 has been stopped, as shown in figure 1c. A suitable control system may be used for controlling the operation of the dry-forming mould system S and the mould parts.

The cellulose products 1 are dry-formed from the cellulose blank structure 2 in the dry-forming mould system S by applying the forming pressure P_{F} and a forming temperature T_{F} onto the air-formed cellulose blank structure 2. The cellulose blank structure 2 is heated to a forming temperature T_{F} in the range of 100-300 °C, preferably in the range of 100-200 °C, and pressed with a forming pressure P_{F} in the range of 1-100 MPa, preferably in the range of 4-20 MPa. The first mould part 3 is arranged for forming the cellulose products 1 through interaction with the corresponding second mould part 4. During dry-forming of the cellulose products 1, the cellulose blank structure 2 is arranged between the first mould part 3 and the second mould part 4, and exerted to the forming pressure P_{F} in the range of 1-100 MPa, preferably in the range of 4-20 MPa, and the forming temperature T_{F} in the range of 100-300°C, preferably in the range of 100-200 °C. When dry-forming the cellulose products 1, hydrogen bonds are formed between the cellulose fibres in the cellulose blank structure 2 arranged between the first mould part 3 and the second mould part 4, due to the applied forming pressure P_{F} and forming temperature T_{F} together with adequate moist content in the cellulose blank structure 2. The temperature and pressure levels are for example measured in the cellulose blank structure 2 during the dry-forming process with suitable sensors arranged in or in connection to the cellulose fibres in the cellulose blank structure 2. The cellulose blank structure 2 is typically containing less than 45 weight percent water when formed in the dry-forming mould system S.

The cellulose blank structure 2 may be arranged between the mould parts in any suitable way, and as an example, the cellulose blank structure 2 may be fed with a suitable feeding device, which is transporting the cellulose blank structure 2 to the mould parts in the feeding direction D_{F}. The feeding device could for example be a conveyor belt, a forming wire unit, an industrial robot, or any other suitable manufacturing equipment. The transportation speed may differ depending on the types of cellulose products 1 produced, and is chosen to match the forming speed in the dry-forming mould system S.

In the embodiment illustrated in figures 1a-c, the first mould part 3 is arranged as a positive mould part, and the second mould part 4 is arranged as a negative mould part. In alternative embodiments, the first mould part 3 may be arranged as a negative mould part, and the second mould part 4 arranged as a positive mould part.

The first mould part 3 and/or the second mould part 4 may be arranged with a deformation element. During the forming of the cellulose products 1, the deformation element is deformed to exert the forming pressure P_{F} onto the cellulose blank structure 2, and through deformation of the deformation element, an even pressure distribution is achieved even if the cellulose products are having complex three-dimensional shapes, such as for example shapes with a recessed undercut section having a negative draft angle, or if the cellulose blank structure 2 is having a varied thickness. To exert a required forming pressure P_{F} on the cellulose blank structure 2, the deformation element is made of a material that can be deformed when a force or pressure is applied, and the deformation element is suitably made of an elastic material capable of recovering size and shape after deformation. The deformation element may further be made of a material with suitable properties that is withstanding the high forming pressure P_{F} and forming temperature T_{F} levels used when forming the cellulose products 1. The deformation element may be made of a suitable structure of elastomeric material or materials, and as an example, the deformation element may be made of a massive structure or an essentially massive structure of silicone rubber, polyurethane, polychloroprene, or rubber. A single deformation element structure, or a plurality of deformation element structures, may be used.

Depending on the design of the dry-forming mould system S, the forming pressure P_{F} may be applied onto the air-formed cellulose blank structure 2 in the range of 1-100 MPa, preferably in the range of 4-20 MPa, in a single pressing operation O_{SP}. With a single pressing operation O_{SP} is meant that the cellulose product 1 is formed from the cellulose blank structure 2 in one single pressing step in the dry-forming mould system S. In the single pressing operation O_{SP}, the first mould part 3 and the second mould part 4 are interacting with each other for establishing the forming pressure P_{F} and the forming temperature T_{F} during a single operational engagement step. Thus, in the single pressing operation O_{SP}, the forming pressure P_{F} and the forming temperature T_{F} are not applied to the cellulose blank structure in two or more repeated pressing steps.

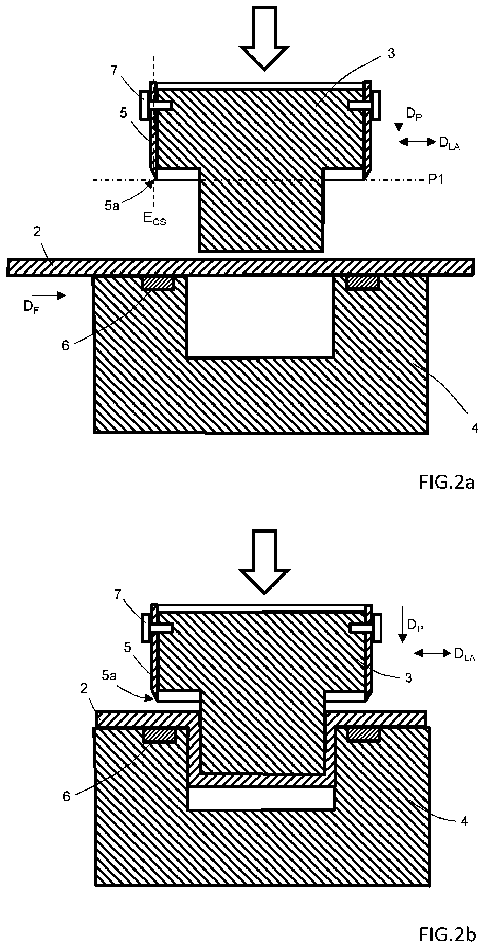

A more detailed view of the first mould part 3 and second mould part 4 in a cellulose product forming cycle is schematically illustrated in figures 2a-d. In the illustrated embodiment, the first mould part 3 comprises a flexible cutting element 5 and the second mould part 4 comprises an anvil plate 6. The flexible cutting element 5 is arranged with a cutting edge 5a configured for operating in the pressing direction D_{P}, as illustrated in for example figures 2a-d, and the anvil plate 6 is arranged to cooperate with the cutting edge 5a during forming of the cellulose products 1. The first mould part 3 and the second mould part 4 are pressed together in the pressing direction D_{P} in a first pressing stroke S_{P1} to apply the forming pressure P_{F} onto the cellulose blank structure 2. The flexible cutting element 5 is cutting out the cellulose product 1 from the cellulose blank structure 2 by pressing the cutting edge 5a towards and in contact with the anvil plate 6 with a predetermined cutting force F_{C}, simultaneously with the first pressing stroke S_{P1}. In this embodiment, the cutting edge 5a is pressed in contact with the anvil plate 6 with the predetermined cutting force F_{C} simultaneously with applying the forming pressure P_{F} onto the cellulose blank structure 2.

To cut out the cellulose products 1 from the cellulose blank structure 2 in an efficient manner, the predetermined cutting force F_{C} is in the range of 5-100 N/mm, preferably in the range of 10-50 N/mm, where the millimetres are referring to the cutting distance in the cellulose blank structure 2. The total cutting force is thus calculated by multiplying the total cutting distance in millimetres with the used cutting force per millimetre. The total cutting distance is equal with the total circumferential length of the cutting edge 5a of the flexible cutting element 5. These ranges are suitable for all dry-forming mould system S embodiments.

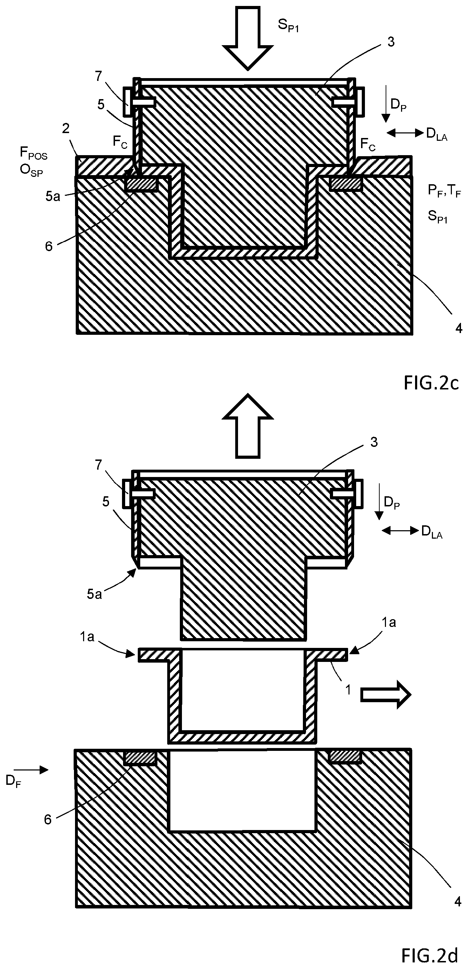

In order to form the cellulose products 1, the cellulose blank structure 2 is arranged between the first mould part 3 and the second mould part 4, as shown in figure 2a. Upon forming of the cellulose products 1, the first mould part 3 is moved towards the second mould part 4, and in the illustrated embodiment, the cellulose blank structure 2 is pushed by the first mould part 3 into the second mould part 4, as shown in figure 2b. When the first mould part 3 is pushed towards the second mould part 4 with the cellulose blank structure 2 positioned between the mould parts, the forming pressure P_{F} is established onto the cellulose blank structure 2 by the pushing force applied by the first mould part 3, as schematically illustrated in figure 2c. The interaction between the first mould part 3 and the second mould part 4 is thus establishing the forming pressure P_{F} in the first pressing stroke S_{P1}. The dry-forming mould system S suitably comprises a heating unit that is establishing the forming temperature T_{F} in the cellulose blank structure 2. The heating unit may have any suitable configuration, and as an example, a heated mould part or heated mould parts may be used for establishing the forming temperature T_{F}. The heating unit may be integrated in or cast into the first mould part 3 and/or the second mould part 4, and suitable heating devices are e.g. electrical heaters, such as a resistor element, or fluid heaters. Other suitable heat sources may also be used. In the position shown in figure 2c, the flexible cutting element 5 is cutting out the cellulose product 1 from the cellulose blank structure 2 by pressing the cutting edge 5a towards and in contact with the anvil plate 6 with the predetermined cutting force F_{C}. The cutting operation is taking place simultaneously with the first pressing stroke S_{P1}. When the cellulose products have been formed, the first mould part 3 and the second mould part 4 are released from each other after cutting out the cellulose product 1 for removing the cellulose product 1 from the dry-forming mould system S.

When the cellulose products have been dry-formed in the dry-forming mould system S, the first mould part 3 is moved away from the second mould part 4 in a direction opposite the pressing direction D_{P}, as shown in figure 2d, and the formed cellulose product 1 can be removed from the mould parts with a suitable removal device. After removal of the cellulose product 1, the cellulose product forming cycle can be repeated.

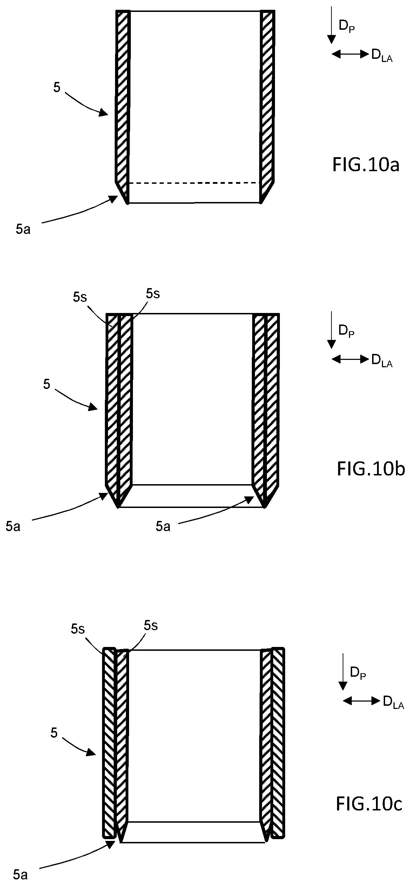

As shown in figures 2a-d, the flexible cutting element 5 is releasably attached to the first mould part 3, and the flexible cutting element 5 extends along an outer peripheral edge section of the first mould part 3. In this way the flexible cutting element 5 is extending around the first mould part 3, and the cutting edge 5a is provided with an extension and shape in a first plane P1 perpendicular to the pressing direction D_{P} corresponding to an outer peripheral edge 1a of the cellulose product 1 to be formed in the dry-forming mould system S. Further, the flexible cutting element 5 is arranged with a flat band-like or strip-like configuration formed from a sheet material, and has a thin elongated cross-sectional extension E_{CS} in the pressing direction D_{P}. The cross-sectional extension E_{CS} is suitably arranged parallel to the pressing direction D_{P}, as indicated with a dotted line in figure 2a and shown in figure 10a, or alternatively inclined.

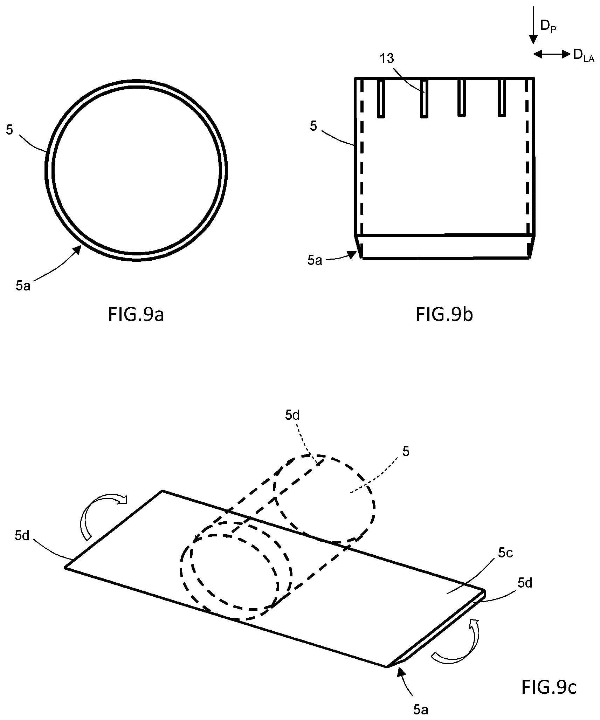

For all embodiments, the flexible cutting element 5 is releasably attached to the first mould part 3. In the embodiment shown in figures 2a-d, the flexible cutting element 5 is releasably attached to the first mould part 3 by means of one or more fastening elements 7. The flexible cutting element 5 is suitably arranged with grooves or openings 13 for receiving the fastening elements 7, as shown in figure 9b. The fastening elements 7 may be arranged as one or more screws that are holding the flexible cutting element 5 in position relative to the first mould part 3. The screws may engage threaded holes in the first mould part 3 for attaching the flexible cutting element 5 to the first mould part 3. It should however be understood that any suitable fastening means may be used in other embodiments, such as for example clamping members. By removing the fastening elements 7, the cutting element 5 can be easily removed from the first mould part 3. Once removed from the first mould part 3, a new or a sharpened cutting element 5 can be attached to the first mould part 3 and held in position by the fastening elements 7.

With the expression flexible is for all embodiments meant that the flexible cutting element 5 is made of a material that is allowed to flex or being deformed in order to adapt the shape of the flexible cutting element 5 to the shape of the outer peripheral edge 1a of the cellulose products 1 to be cut out from the cellulose blank structure 2, and also for adapting the cutting edge 5a to uneven sections or areas of the anvil plate 6 if necessary when the cutting edge 5a is in direct contact with the anvil plate 6. The flexible cutting element 5 is made from a material that is bendable without breaking when being shaped, such as for example a material with spring-like properties. The flexible cutting element 5 may for example be deformed or bent in the lateral direction D_{LA} during a cutting operation, and after the cutting operation, the flexible cutting element is resuming its original non-deformed shape. The flexible cutting element 5 is suitably arranged as a steel rule die cutting element that is bent into the shape of the outer peripheral edge 1a of the cellulose products 1. Suitable materials for the flexible cutting element 5 are for example steel or other suitable metals or metallic materials.

The anvil plate 6 may be made of a material that is withstanding the predetermined cutting force F_{C} and minimizes blunting of the cutting edge 5a. Suitable materials for the anvil plate 6 are for example metals or metal alloys, such as steel compositions. The anvil plate 6 may comprise a material being softer than the cutting edge 5a. By using a softer material, the cutting edge 5a may be pressed at the predetermined cutting force F_{C} in contact with the anvil plate 6 in an initial cutting step in which the cutting edge 5a is pressed against the anvil plate 6 for a first time. The initial cutting step is then used for deforming at least a part of the softer material of the anvil plate 6, such that the cutting edge 5a exerts an even cutting pressure onto the anvil plate 6. The deformation of the softer material of the anvil plate 6 is enabling an even cutting pressure distribution onto the anvil plate 6 from the cutting edge 5a in following pressing operations after the initial cutting step. It should be understood that the deformation of the softer material on the anvil plate 6 is maintained after the initial cutting step and is thus used for an efficient calibration of the exerted cutting pressure from the cutting edge 5a onto the anvil plate 6.

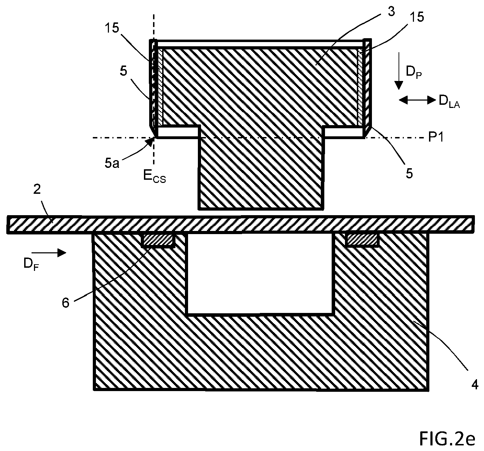

In figure 2e, an alternative configuration of the first mould part 3 with the flexible cutting element 5 is schematically illustrated. In this embodiment, a glue layer 15 is used for releasably attaching the flexible cutting element 5 to the first mould part 3. The glue layer 15 is in this way efficiently bonding the flexible cutting element 5 to the first mould part 3 without the need for the fastening elements described above. The glue layer 15 is suitably formed as a layer of elastic or elastomeric material that is allowing the flexible cutting element 5 to deform during the pressing operation. The glue layer is further forming a seal between the flexible cutting element 5 and the first mould part 3 that is preventing fibres from the cellulose blank structure 2 from being stuck between the first mould part 3 and the flexible cutting element. When needed, the flexible cutting element 5 is suitably removed from the first mould part through mechanical or chemical removal of the glue layer. A glue layer may be used in any embodiment where the flexible cutting element is attached to the mould part.

In figures 9a-b, the flexible cutting element 5 is shown as an isolated part before being attached to the first mould part 3. In the illustrated embodiment, the flexible cutting element 5 has a circular shaped configuration when viewed from below, as understood from figure 9a. However, the flexible cutting element 5 may have any suitable shape depending on the shape of the cellulose products 1 to be cut out from the cellulose blank structure. A side view of the flexible cutting element 5 is shown in figure 9b, which is corresponding to the position of the flexible cutting element 5 in figures 2a-e. The flexible cutting element 5 is suitably formed from a flexible metal blank 5a, as shown in figure 9c. The metal blank 5c has a thin thickness dimension allowing the metal blank 5c to be formed into the shape of the cellulose products 1 to be cut out from the cellulose blank structure 2. As shown in figure 9c, the metal blank 5c is bent into the desired shape of the flexible cutting element 5, as illustrated with dotted lines. Side edges 5d of the metal blank 5c are suitably joined by welding. Suitable metal blank materials are for example steel or other metals or metallic materials.

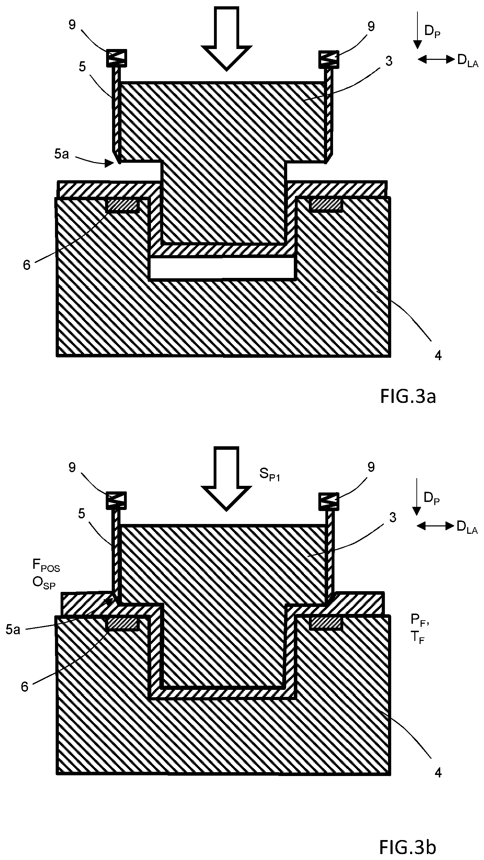

In an alternative embodiment illustrated in figures 3a-c, the flexible cutting element 5 is configured for cutting out the cellulose product 1 from the cellulose blank structure 2 by pressing the cutting edge 5a towards and in contact with the anvil plate 6 with a predetermined cutting force F_{C}, in a second pressing stroke S_{P2} in the pressing direction D_{P} after start of the first pressing stroke S_{P1}. The dry-forming mould system S may further comprise a pressure member 9 that is pressing onto the flexible cutting element 5 in the pressing direction D_{P}. The cutting edge 5a is pressed in contact with the anvil plate 6 with the predetermined cutting force F_{C} in the second pressing stroke S_{P2} by use of the pressure member 9, and the pressure member 9 is thus used for establishing the cutting force F_{C} for cutting out the cellulose products 1 from the cellulose blank structure 2. The pressure member 9 may be arranged as an electric, pneumatic or hydraulic actuator that is pressing the cutting edge 5a in contact with the anvil plate 6.

With the configuration illustrated in figures 3a-c, the flexible cutting element 5 suitably is movably arranged in the pressing direction D_{P} relative to the first mould part 3. The predetermined cutting force F_{C} is established when pressing the cutting edge 5a towards and in contact with the anvil plate 6 upon movement of the flexible cutting element 5 relative to the first mould part 3. The flexible cutting element 5 is releasably attached to the first mould part 3 with suitable non-illustrated fastening elements.

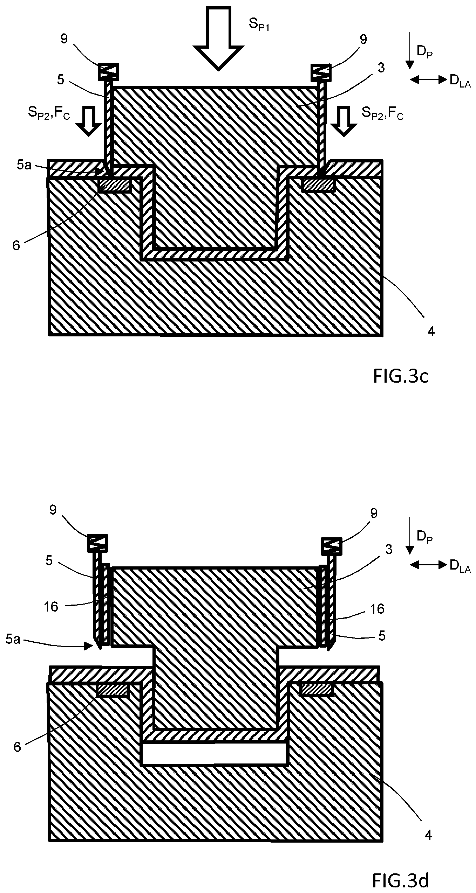

In figure 3a, the cellulose blank structure 2 has been arranged between the first mould part 3 and the second mould part 4, and the first mould part 3 is moved towards the second mould part 4. The cellulose blank structure 2 has been pushed by the first mould part 3 into the second mould part 4. When the first mould part 3 is pushed towards the second mould part 4 with the cellulose blank structure 2 positioned between the mould parts, the forming pressure P_{F} is established onto the cellulose blank structure 2 by the pushing force applied by the first mould part 3 in a first pressing stroke S_{P1}, as schematically illustrated in figure 3b. The interaction between the first mould part 3 and the second mould part 4 is thus establishing the forming pressure P_{F} and the forming temperature T_{F} onto the air-formed cellulose blank structure 2 in the first pressing stroke S_{P1}. The cellulose blank structure 2 is heated to a forming temperature T_{F} in the range of 100-300 °C, preferably in the range of 100-200 °C, and pressed with a forming pressure P_{F} in the range of 1-100 MPa, preferably in the range of 4-20 MPa, in order to form the cellulose products 1. In the position shown in figure 3c, the flexible cutting element 5 is cutting out the cellulose product 1 from the cellulose blank structure 2 by pressing the cutting edge 5a towards and in contact with the anvil plate 6 with the predetermined cutting force F_{C}. The cutting operation is taking place in the second pressing stroke S_{P2} after start of the first pressing stroke S_{P1}, by a movement of the flexible cutting element 5 in the pressing direction D_{P} relative to the first mould part 3. The pressure member 9 may be used for both displacing the flexible cutting element 9 in the pressing direction D_{P} from the position shown in figure 3b to the position shown in figure 3c, and for exerting the cutting force F_{C}. The second pressing stroke S_{P2} is thus used for the cutting operation where the cutting edge 5a of the flexible cutting element 5 is pressed in contact with the anvil plate 6 for cutting out the cellulose products 1 from the cellulose blank structure 2. The first pressing stroke S_{P1} and the second pressing stroke S_{P2} may be overlapping in time as understood from figure 3c. When the respective pressing operations are completed, the first mould part 3 is moved in a direction away from the second mould part 4, and the flexible cutting element 5 is moved back to the position shown in figure 3a.

In figure 3d, an alternative configuration of the first mould part 3 with the flexible cutting element 5 is schematically illustrated. In this embodiment, a sliding surface bearing 16 is arranged between the first mould part 3 and the flexible cutting element 5. The sliding surface bearing 16 is enabling low friction upon movement of the flexible cutting element 5 relative to the first mould part 3. The sliding surface bearing 16 may be made of an elastic or elastomeric material forming a seal that is preventing fibres from the cellulose blank structure 2 from being stuck between the first mould part 3 and the sliding surface bearing 16. Sliding surface bearings are suitably used in any embodiment where the flexible cutting element is arranged to move relative to the mould part.

In alternative embodiments, the second pressing stroke S_{P2} may take place when the first pressing stroke S_{P1} is completed or after the first pressing stroke S_{P1} is completed. In this way, the cutting operation with the pressing of the cutting edge 5a towards and in contact with the anvil plate 6 with the predetermined cutting force F_{C} may take place upon movement of the first mould part 3 away from the second mould part 4.

In further alternative embodiments, the movably arranged flexible cutting element 5 relative to the first mould part 3 is allowing pressing of the cutting edge 5a towards and in contact with the anvil plate 6 with the predetermined cutting force F_{C} simultaneously with the first pressing stroke S_{P1}, and continue pressing the cutting edge 5a at the predetermined cutting force F_{C} in contact with the anvil plate 6 when the first pressing stroke S_{P1} is completed. In this way, the first mould part 3 may be moved in a direction away from the second mould part 4 with a continued predetermined cutting force F_{C} applied, where the cutting edge 5a is pressed towards and in contact with the anvil plate 6.

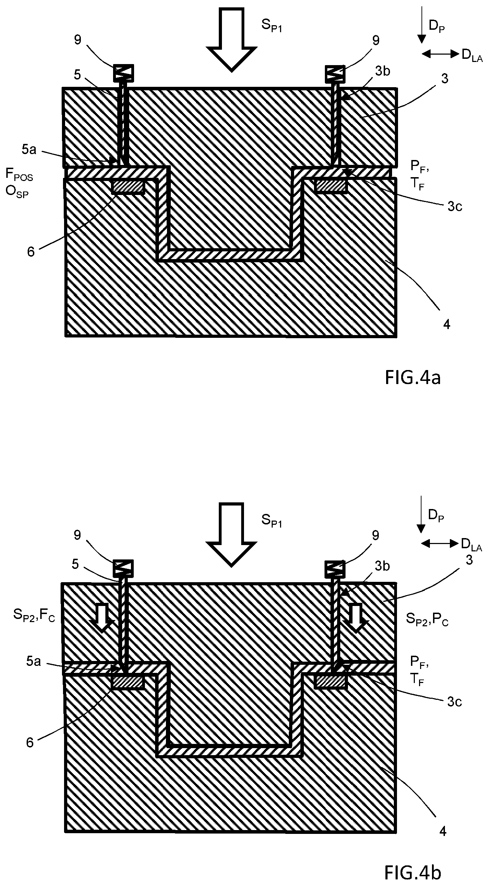

In an alternative embodiment shown in figures 4a-b, the flexible cutting element 5 is releasably attached to the first mould part 3 and arranged in a groove 3b of the first mould part 3. The groove 3b has an extension in the pressing direction D_{P} and comprises a groove opening 3c facing the second mould part 4. The flexible cutting element 5 may be movably arranged within the groove 3b relative to the first mould part 3, as shown in figures 4a-b, with a configuration and operation similar to the embodiment described above in connection to figures 3a-c. In figure 4a, the first mould part 3 is pushed towards the second mould part 4 with the cellulose blank structure 2 positioned between the mould parts, and the forming pressure P_{F} is established onto the cellulose blank structure 2 by the pushing force applied by the first mould part 3 in a first pressing stroke S_{P1}. In figure 4b, the flexible cutting element 5 is cutting out the cellulose product 1 from the cellulose blank structure 2 by pressing the cutting edge 5a towards and in contact with the anvil plate 6 with the predetermined cutting force F_{C}. The cutting operation is taking place in a second pressing stroke S_{P2} after start of the first pressing stroke S_{P1}, by a movement of the flexible cutting element 5 in the pressing direction D_{P} relative to the first mould part 3. The cutting edge 5a is pressed in contact with the anvil plate 6 with the predetermined cutting force F_{C} in the second pressing stroke S_{P2} by use of the pressure member 9, and the pressure member 9 is thus used for displacing the flexible cutting element 9 in the pressing direction and for establishing the cutting force F_{C} for cutting out the cellulose products 1 from the cellulose blank structure 2.

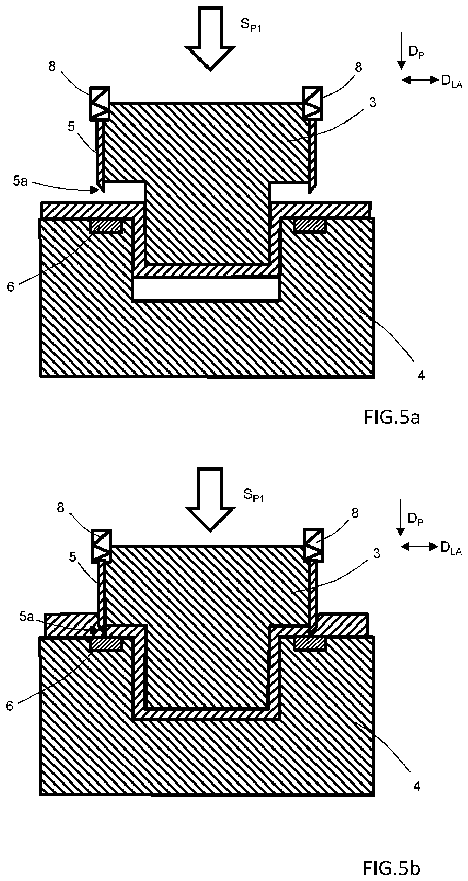

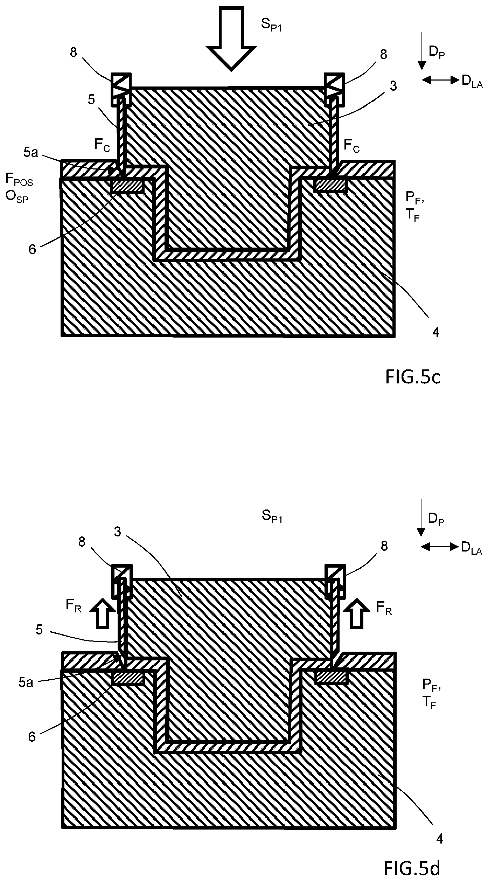

In an alternative embodiment illustrated in figures 5a-d, the flexible cutting element 5 is releasably attached to the first mould part 3 via one or more spring elements 8. The flexible cutting element 5 is releasably attached to the one or more spring elements 8 with non-illustrated fastening members. The spring elements 8 are establishing the predetermined cutting force F_{C} when pressing the cutting edge 5a in contact with the anvil plate 6. The spring characteristics are suitably chosen to exert the predetermined cutting force F_{C} when the first mould part is pressed towards the second mould part in a forming position, as shown in figure 5c. The cutting edge 5a can be pressed in contact with the anvil plate 6 and the predetermined cutting force F_{C} controlled by the one or more spring elements 8. In this embodiment, the one or more spring elements 8 may be configured to control the predetermined cutting force F_{C}, and further release the flexible cutting element 5 in a direction opposite the pressing direction D_{P} when a predetermined release force F_{R} acting on the one or more spring elements 8 is reached, as shown in figure 5d. The spring element may thus be arranged to release the pressure, when the predetermined release force F_{R} is reached, and move the cutting edge 5a away from the anvil plate 6. The release function may for example be achieved by detaching or decoupling the flexible cutting element 5 from the spring elements 8 or by using bi-stable spring elements 8, when the predetermined release force F_{R} acting on the one or more spring elements 10 is reached. The spring elements 8 may be arranged as metal springs or other suitable springs.

With the configuration illustrated in figures 5a-d, the flexible cutting element 5 suitably is movably arranged in the pressing direction D_{P} relative to the first mould part 3. The predetermined cutting force F_{C} is established when pressing the cutting edge 5a towards and in contact with the anvil plate 6 upon movement of the flexible cutting element 5 relative to the first mould part 3.

In figure 5a, the cellulose blank structure 2 has been arranged between the first mould part 3 and the second mould part 4, and the first mould part 3 is moved towards the second mould part 4. The cellulose blank structure 2 has been pushed by the first mould part 3 into the second mould part 4. When the first mould part 3 is pushed towards the second mould part 4 with the cellulose blank structure 2 positioned between the mould parts, the forming pressure P_{F} is built up between the mould parts onto the cellulose blank structure 2 by the pushing force applied by the first mould part 3, as schematically illustrated in figure 5b. Upon further movement of the first mould part 3 towards the second mould part 4, as shown in figure 5c, the forming pressure P_{F} is established onto the cellulose blank structure 2 by the pushing force applied by the first mould part 3, and the flexible cutting element 5 is cutting out the cellulose product 1 from the cellulose blank structure 2 by pressing the cutting edge 5a towards and in contact with the anvil plate 6 with the predetermined cutting force F_{C} through compression of the spring elements 8. The interaction between the first mould part 3 and the second mould part 4 is thus establishing the forming pressure P_{F} and the forming temperature T_{F} onto the air-formed cellulose blank structure 2. The cellulose blank structure 2 is heated to a forming temperature T_{F} in the range of 100-300 °C, preferably in the range of 100-200 °C, and pressed with a forming pressure P_{F} in the range of 1-100 MPa, preferably in the range of 4-20 MPa, in order to form the cellulose products 1. When the predetermined release force F_{R} is reached, the flexible cutting element 5 is moved in a direction away from the second mould part, as shown in figure 5d, and the cutting edge 5a is moved away from the anvil plate 6. Once the pressing operations are completed, the first mould part 3 is moved in a direction away from the second mould part 4, and the flexible cutting element 5 is moved back to the position shown in figure 5a.

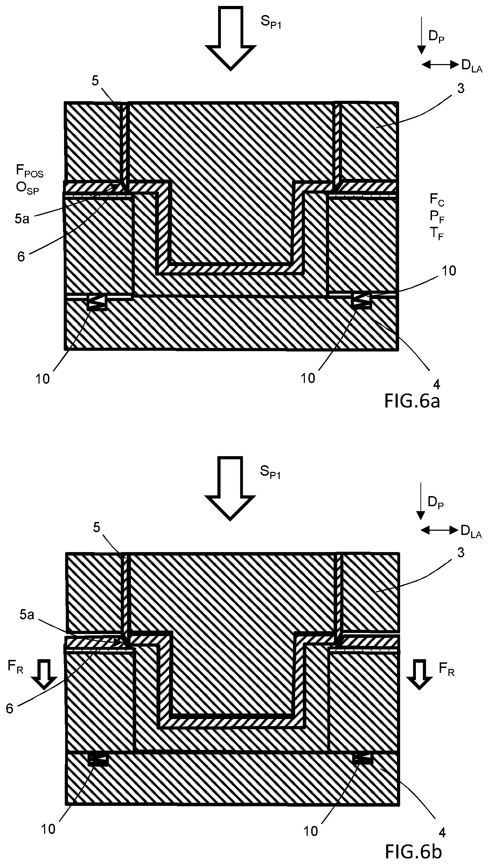

In an alternative embodiment shown in figures 6a-b, the second mould part 4 comprises a spring member 10 configured to support the anvil plate 6. The anvil plate 6 is through the arrangement with the spring member 10 movably arranged in the pressing direction D_{P} relative to the second mould part 4. The spring member 10 is controlling the cutting force F_{C}, and may also be used for releasing the anvil plate 6 in the pressing direction D_{P} when a predetermined release force F_{R} acting on the spring member 10 is reached, as illustrated in figure 6b. In this embodiment, the flexible cutting element 5 may be movably arranged relative to the first mould part 3 or non-movably arranged, as described in the embodiments above. The spring member 10 may be arranged with one or more spring elements made of metal, or one or more spring elements made of an elastomeric material, such as for example silicone or other suitable polymer. The release function may for example be achieved by detaching or decoupling the anvil plate 6 from the spring member 10 or by using a bi-stable spring member 10, when the predetermined release force F_{R} acting on the spring member 10 is reached.

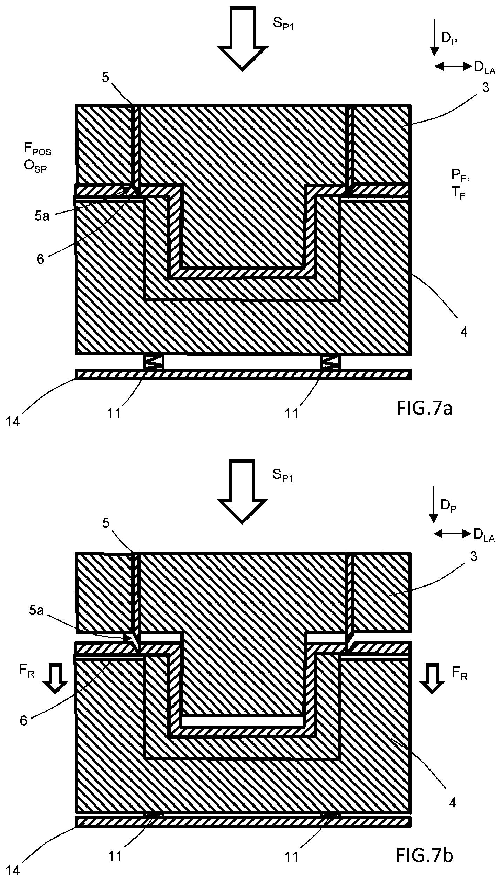

In a further alternative embodiment shown in figures 7a-b, the second mould part 4 comprises a spring member 11 configured to support the second mould part 4. The second mould part 4 is through the arrangement with the spring member 11 movably arranged in the pressing direction D_{P} relative to a base structure 14. The spring member 11 is controlling the cutting force F_{C}, and may also be used for releasing the second mould part 4 in the pressing direction D_{P} when a predetermined release force F_{R} acting on the spring member 11 is reached, as illustrated in figure 7b. During the forming of the cellulose product 1, the spring function of the spring member 11 may be deactivated for a rigid connection between the second mould part 4 and the base structure 14 supporting the high forming pressure P_{F}. During the cutting operation, the spring member is active. In this embodiment, the flexible cutting element 5 is suitably movably arranged relative to the first mould part 3, as described in the embodiments above. The spring member 10 may be arranged with one or more spring elements made of metal, or one or more spring elements made of an elastomeric material, such as for example silicone or other suitable polymer. The release function may for example be achieved by detaching or decoupling the second mould part 4 from the spring member 11 or by using a bi-stable spring member 11, when the predetermined release force F_{R} acting on the spring member 10 is reached.

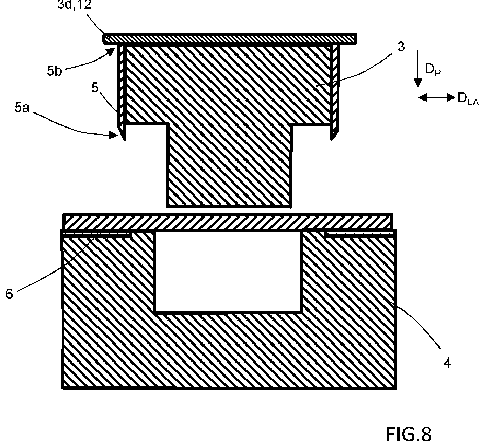

In an alternative embodiment shown in figure 8, the flexible cutting element 5 comprises an edge portion 5b opposite the cutting edge 5a, and the first mould part 3 comprises a backing plate 3d with a deformable material structure 12 connected to the edge portion 5b. When the cutting edge 5a is pressed at the predetermined cutting force F_{C} in contact with the anvil plate 6 in an initial cutting step in which the cutting edge 5a is pressed against the anvil plate 6 for a first time, at least a part of the backing plate 3d is deformed by pressure from the edge portion 5b upon pressing of the cutting edge 5a in contact with the anvil plate 6 such that the cutting edge 5a exerts an even cutting pressure onto the anvil plate 6.

Suitable materials for the deformable material structure 12 are for example metals or metal alloys, such as steel compositions. By using a deformable material, the edge portion 5b is deforming the deformable material structure 12 when the cutting edge 5a is pressed at the predetermined cutting force F_{C} in contact with the anvil plate 6 in the initial cutting step. The initial cutting step is thus used for deforming at least a part of the backing plate 3d, such that the cutting edge 5a exerts an even cutting pressure onto the anvil plate 6. The deformation of the deformable material structure 12 is enabling an even pressure distribution by the cutting edge 5a onto the anvil plate 6 in following pressing operations after the initial cutting step. It should be understood that the deformation of the deformable material structure 12 is maintained after the initial cutting step and is thus used for an efficient calibration of the exerted cutting pressure from the cutting edge 5a onto the anvil plate 6.

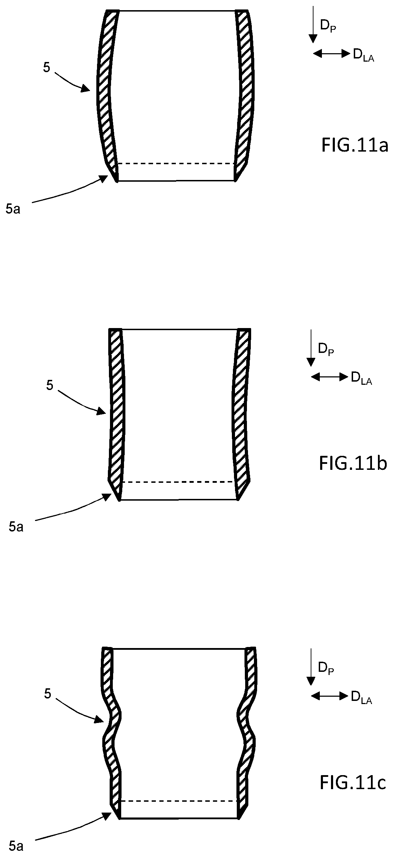

For all embodiments, the flexible cutting element 5 may be made of a single piece of material as shown in figures 10a and 11a-e, with one structural section in the lateral direction D_{LA}, where the lateral direction D_{LA} is perpendicular to the pressing direction D_{P}. In alternative embodiments, the flexible cutting element 5 is made of two or more structural sections 5s arranged in connection to each other in the lateral direction D_{LA} in a layered configuration. In the embodiment shown in figure 10b, the flexible cutting element 5 has a two-layer configuration and is made of two structural sections 5s arranged in connection to each other in the lateral direction D_{LA}, where both structural sections 5s are forming the cutting edge 5a. In the embodiment shown in figure 10c, the flexible cutting element 5 has a two-layer configuration and is made of two structural sections 5s arranged in connection to each other in the lateral direction D_{LA}, where only one structural section 5s is forming the cutting edge 5a. The two or more structural sections 5s may be directly attached to each other for example through welding, gluing or other suitable attachment methods. Alternatively, the two or more structural sections 5s are arranged in connection to each other without being directly attached to each other.

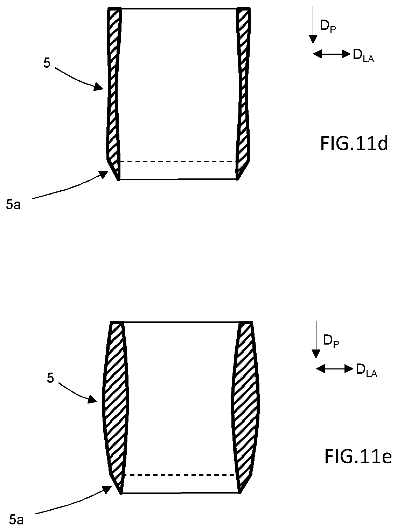

The flexible cutting element 5 may as illustrated in figure 10a have a straight cross-sectional configuration, where the flexible cutting element 5 is arranged with a flat band-like or strip-like configuration and has a thin elongated cross-sectional extension in the pressing direction D_{P}. In other alternative embodiments, the flexible cutting element 5 may instead have a shaped cross-sectional configuration. In figure 11a, the flexible cutting element 5 has an even cross-sectional thickness with a curved cross-sectional configuration and the flexible cutting element 5 is formed with an outer convex barrel-like shape. In figure 11b, the flexible cutting element 5 has an even cross-sectional thickness with a curved cross-sectional configuration and the flexible cutting element 5 is formed with an outer concave hourglass-like shape. In figure 11c, the flexible cutting element 5 has an even cross-sectional thickness with a wave-shaped cross-sectional configuration and the flexible cutting element 5 is formed with an outer undulating shape. The curved cross-sectional configurations in figures 11a-c are allowing the flexible cutting element 5 to flex and slightly deform during the pressing operation. In figure 11d, the flexible cutting element 5 has a varied cross-sectional thickness and the flexible cutting element 5 is formed with an outer concave hourglass-like shape. In figure 11e, the flexible cutting element 5 has a varied cross-sectional thickness and the flexible cutting element 5 is formed with an outer convex barrel-like shape. It should be understood that in other embodiments, the flexible cutting element 5 may be designed with any suitable shape and configuration and not only the ones described above and illustrated in the figures.

It will be appreciated that the above description is merely exemplary in nature and is not intended to limit the present disclosure, its application or uses, wherein the scope of protection is defined by the appended claims. While specific examples have been described in the specification and illustrated in the drawings, it will be understood by those of ordinary skill in the art that various changes may be made without departing from the scope defined by the claims. Furthermore, modifications may be made to adapt a particular situation or material to the teachings of the present disclosure.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Cellulose product
- 1a:: Outer peripheral edge
- 2:: Cellulose blank structure
- 3:: First mould part
- 3b:: Groove
- 3c:: Groove opening
- 3d:: Backing plate
- 4:: Second mould part
- 5:: Flexible cutting element
- 5a:: Cutting edge
- 5b:: Edge portion
- 5c:: Metal blank
- 5d:: Side edge
- 5s:: Structural section
- 6:: Anvil plate
- 7:: Fastening element
- 8:: Spring element
- 9:: Pressure member
- 10:: Spring member
- 11:: Spring member
- 12:: Deformable material structure
- 13:: Opening
- 14:: Base structure
- 15:: Glue layer
- 16:: Sliding surface bearing

- D_{F}:: Feeding direction
- D_{LA}:: Lateral direction
- D_{P}:: Pressing direction
- E_{CS}:: Cross-sectional extension
- F_{C}:: Cutting force
- F_{POS}:: Product forming position
- F_{R}:: Release force
- O_{SP}:: Single pressing operation
- S:: Dry-forming mould system
- S_{P1}:: First pressing stroke
- S_{P2}:: Second pressing stroke
- P1:: First plane
- P_{F}:: Forming pressure
- T_{F}:: Forming temperature

## Claims

1. A dry-forming cellulose product mould system (S) for dry-forming a cellulose product (1) from an air-formed cellulose blank structure (2), wherein the dry-forming mould system (S) comprises:
an air-formed cellulose blank structure (2) and a cellulose product (1) manufactured therefrom; and
a first mould part (3) and an opposing second mould part (4) configured for cooperating with each other in a pressing direction (D_{P}) upon forming of the cellulose product (1), wherein the first mould part (3) and the second mould part (4) are configured for being pressed together in the pressing direction (D_{P}) in a first pressing stroke (S_{P1}) to apply a forming pressure (P_{F}) onto the cellulose blank structure (2),
wherein a flexible cutting element (5) with a cutting edge (5a) configured for operating in the pressing direction (D_{P}) is releasably attached to the first mould part (3), wherein the second mould part (4) comprises an anvil plate (6) arranged to cooperate with the cutting edge (5a) of the flexible cutting element (5), wherein the flexible cutting element (5) is made of a material that is allowed to flex in order to adapt the shape of the flexible cutting element (5) to a desired shape, and that is bendable without breaking when being shaped, wherein the flexible cutting element (5) is configured for cutting out the cellulose product (1) from the cellulose blank structure (2) by pressing the cutting edge (5a) towards and in contact with the anvil plate (6) with a predetermined cutting force (F_{C}), simultaneously with the first pressing stroke (S_{P1}) or in a second pressing stroke (S_{P2}) in the pressing direction (D_{P}) after start of the first pressing stroke (S_{P1}).

2. The dry-forming mould system (S) according to claim 1,
wherein the cutting edge (5a) has an extension and shape in a first plane (P1) perpendicular to the pressing direction (D_{P}) corresponding to an outer peripheral edge (1a) of the cellulose product (1).

3. The dry-forming mould system (S) according to claim 1 or 2,
wherein the flexible cutting element (5) has a configuration with one structural section in a lateral direction (D_{LA}), or two or more structural sections (5s) arranged in connection to each other in a lateral direction (D_{LA}), wherein the lateral direction (D_{LA}) is perpendicular to the pressing direction (D_{P}).

4. The dry-forming mould system (S) according to any preceding claim,
wherein the flexible cutting element (5) is movably arranged in the pressing direction (D_{P}) relative to the first mould part (3).

5. The dry-forming mould system (S) according to any preceding claim,
wherein the flexible cutting element (5) extends along an outer peripheral edge section of the first mould part (3).

6. The dry-forming mould system (S) according to any of claims 1 to 4,
wherein the flexible cutting element (5) is arranged in a groove (3b) of the first mould part (3), wherein the groove (3b) has an extension in the pressing direction (D_{P}) and comprises a groove opening (3c) facing the second mould part (4).

7. The dry-forming mould system (S) according to any preceding claim,
wherein the flexible cutting element (5) is releasably attached to the first mould part (3) by means of one or more fastening elements (7).

8. The dry-forming mould system (S) according to any preceding claim,
wherein the flexible cutting element (5) is releasably attached to the first mould part (3) via one or more spring elements (8).

9. The dry-forming mould system (S) according to any preceding claim,
wherein the anvil plate (6) comprises a material being softer than the cutting edge (5a).

10. The dry-forming mould system (S) according to any preceding claim,
wherein the second mould part (4) comprises a spring member (10) configured to support the anvil plate (6), wherein the anvil plate (6) is movably arranged in the pressing direction (D_{P}) relative to the second mould part (4).

11. The dry-forming mould system (S) according to any preceding claim,
wherein the second mould part (4) comprises a spring member (11) configured to support the second mould part (4), wherein the second mould part (4) is movably arranged in the pressing direction (D_{P}).

12. The dry-forming mould system (S) according to any preceding claim,
wherein the flexible cutting element (5) comprises an edge portion (5b) opposite the cutting edge (5a), wherein the first mould part (3) comprises a backing plate (3d) with a deformable material structure (12) connected to the edge portion (5b).

13. A method for dry-forming a cellulose product (1) in a dry-forming mould system (S) from an air-formed cellulose blank structure (2), wherein the dry-forming mould system (S) comprises a first mould part (3) and an opposing second mould part (4) arranged to cooperate with each other in a pressing direction (D_{P}) upon forming of the cellulose product (1), wherein a flexible cutting element (5) with a cutting edge (5a) operating in the pressing direction (D_{P}) is releasably attached to the first mould part (3), wherein the second mould part (4) comprises an anvil plate (6) arranged to cooperate with the cutting edge (5a) of the flexible cutting element (5), wherein the flexible cutting element (5) is made of a material that is allowed to flex in order to adapt the shape of the flexible cutting element (5) to a desired shape, and that is bendable without breaking when being shaped, wherein the method comprises the steps:
providing the air-formed cellulose blank structure (2), and arranging the cellulose blank structure (2) between the first mould part (3) and the second mould part (4);
forming the cellulose product (1) by pressing together the first mould part (3) and the second mould part (4) in a first pressing stroke (S_{P1}) in the pressing direction (D_{P}), wherein a forming pressure (P_{F}) is applied onto the cellulose blank structure (2);
cutting out the cellulose product (1) from the cellulose blank structure (2) by pressing the cutting edge (5a) towards and in contact with the anvil plate (6) with a predetermined cutting force (F_{C}); wherein the cutting edge (5a) is pressed towards and in contact with the anvil plate (6) simultaneously with the first pressing stroke (S_{P1}), or wherein the cutting edge (5a) is pressed towards and in contact with the anvil plate (6) in a second pressing stroke (S_{P2}) in the pressing direction (D_{P}) after start of the first pressing stroke (S_{P1}).

14. The method according to claim 13,
wherein the forming pressure (P_{F}) is in the range of 1-100 MPa, preferably in the range of 4-20 MPa, and
wherein the predetermined cutting force (F_{C}) is in the range of 5-100 N/mm, preferably in the range of 10-50 N/mm.

15. The method according to claim 13 or 14,
wherein the flexible cutting element (5) is releasably attached to the first mould part (3) via one or more spring elements (8), wherein the method further comprises the step: establishing the predetermined cutting force (F_{C}) by the one or more spring elements (8) when pressing the cutting edge (5a) in contact with the anvil plate (6).

## Patentansprüche

1. Zelluloseprodukt-Trockenformsystem (S) zum Trockenformen eines Zelluloseprodukts (1) aus einer luftgeformten Zelluloserohlingstruktur (2), wobei das Trockenformsystem (S) Folgendes umfasst:
eine luftgeformte Zelluloserohlingstruktur (2) und ein Zelluloseprodukt (1), das daraus hergestellt wird; und
ein erstes Formteil (3) und ein gegenüberliegendes zweites Formteil (4), die dazu konfiguriert sind, miteinander in einer Pressrichtung (D_{P}) beim Formen des Zelluloseprodukts (1) zusammenzuwirken, wobei das erste Formteil (3) und das zweite Formteil (4) dazu konfiguriert sind, in die Pressrichtung (D_{P}) in einem ersten Presshub (S_{P1}) zusammengepresst zu werden, um einen Formdruck (P_{F}) auf die Zelluloserohlingstruktur (2) auszuüben,
wobei ein flexibles Schneidelement (5) mit einer Schneidkante (5a), die dazu konfiguriert ist, in die Pressrichtung (D_{P}) zu arbeiten, lösbar an dem ersten Formteil (3) befestigt ist, wobei das zweite Formteil (4) eine Ambossplatte (6) umfasst, die dazu angeordnet ist, mit der Schneidkante (5a) des flexiblen Schneidelements (5) zusammenzuwirken, wobei das flexible Schneidelement (5) aus einem Material gefertigt ist, das sich biegen darf, um die Form des flexiblen Schneidelements (5) an eine gewünschte Form anzupassen, und das biegsam ist, ohne beim Formen zu brechen,
wobei das flexible Schneidelement (5) dazu konfiguriert ist, das Zelluloseprodukt (1) aus der Zelluloserohlingstruktur (2) durch Drücken der Schneidkante (5a) in Richtung und in Kontakt mit der Ambossplatte (6) mit einer vorgegebenen Schneidkraft (F_{C}), gleichzeitig mit dem ersten Presshub (S_{P1}) oder in einem zweiten Presshub (S_{P2}) in der Pressrichtung (D_{P}) nach dem Beginn des ersten Presshubs (S_{P1}) auszuschneiden.

2. Trockenformsystem (S) nach Anspruch 1,
wobei die Schneidkante (5a) eine Ausdehnung und Form in einer ersten Ebene (P1) senkrecht zu der Pressrichtung (D_{P}) aufweist, die einem äußeren umlaufenden Rand (1a) des Zelluloseprodukts (1) entsprechen.

3. Trockenformsystem (S) nach Anspruch 1 oder 2,
wobei das flexible Schneidelement (5) eine Konfiguration mit einem Strukturabschnitt in einer seitlichen Richtung (D_{LA}) oder zwei oder mehr Strukturabschnitten (5s), die in Verbindung miteinander in einer seitlichen Richtung (D_{LA}) angeordnet sind, aufweist, wobei die seitliche Richtung (D_{LA}) senkrecht zu der Pressrichtung (D_{P}) ist.

4. Trockenformsystem (S) nach einem der vorhergehenden Ansprüche,
wobei das flexible Schneidelement (5) in der Pressrichtung (D_{P}) beweglich gegenüber dem ersten Formteil (3) angeordnet ist.

5. Trockenformsystem (S) nach einem der vorhergehenden Ansprüche,
wobei sich das flexible Schneidelement (5) entlang eines äußeren umlaufenden Randabschnitts des ersten Formteils (3) erstreckt.

6. Trockenformsystem (S) nach einem der Ansprüche 1 bis 4,
wobei das flexible Schneidelement (5) in einer Nut (3b) des ersten Formteils (3) angeordnet ist, wobei die Nut (3b) eine Ausdehnung in der Pressrichtung (D_{P}) aufweist und eine Nutöffnung (3c) umfasst, die dem zweiten Formteil (4) zugewandt ist.

7. Trockenformsystem (S) nach einem der vorhergehenden Ansprüche,
wobei das flexible Schneidelement (5) mittels eines oder mehrerer Befestigungselemente (7) lösbar an dem ersten Formteil (3) befestigt ist.

8. Trockenformsystem (S) nach einem der vorhergehenden Ansprüche,
wobei das flexible Schneidelement (5) über ein oder mehrere Federelemente (8) lösbar an dem ersten Formteil (3) befestigt ist.

9. Trockenformsystem (S) nach einem der vorhergehenden Ansprüche,
wobei die Ambossplatte (6) ein Material umfasst, das weicher ist als die Schneidkante (5a).

10. Trockenformsystem (S) nach einem der vorhergehenden Ansprüche,
wobei das zweite Formteil (4) ein Federelement (10) umfasst, das dazu konfiguriert ist, die Ambossplatte (6) zu stützen, wobei die Ambossplatte (6) in der Pressrichtung (D_{P}) beweglich gegenüber dem zweiten Formteil (4) angeordnet ist.

11. Trockenformsystem (S) nach einem der vorhergehenden Ansprüche,
wobei das zweite Formteil (4) ein Federelement (11) umfasst, das dazu konfiguriert ist, das zweite Formteil (4) zu stützen, wobei das zweite Formteil (4) in der Pressrichtung (D_{P}) beweglich angeordnet ist.

12. Trockenformsystem (S) nach einem der vorhergehenden Ansprüche,
wobei das flexible Schneidelement (5) einen Randabschnitt (5b) gegenüber der Schneidkante (5a) umfasst, wobei das erste Formteil (3) eine rückseitige Platte (3d) mit einer verformbaren Materialstruktur (12) umfasst, die mit dem Randabschnitt (5b) verbunden ist.

13. Verfahren zum Trockenformen eines Zelluloseprodukts (1) in einem Trockenformsystem (S) aus einer luftgeformten Zelluloserohlingstruktur (2), wobei das Trockenformsystem (S) ein erstes Formteil (3) und ein gegenüberliegendes zweites Formteil (4) umfasst, die dazu angeordnet sind, miteinander in einer Pressrichtung (D_{P}) beim Formen des Zelluloseprodukts (1) zusammenzuwirken, wobei ein flexibles Schneidelement (5) mit einer Schneidkante (5a), die in die Pressrichtung (D_{P}) arbeitet, lösbar an dem ersten Formteil (3) befestigt ist, wobei das zweite Formteil (4) eine Ambossplatte (6) umfasst, die dazu angeordnet ist, mit der Schneidkante (5a) des flexiblen Schneidelements (5) zusammenzuwirken, wobei das flexible Schneidelement (5) aus einem Material gefertigt ist, das sich biegen darf, um die Form des flexiblen Schneidelements (5) an eine gewünschte Form anzupassen, und das biegsam ist, ohne beim Formen zu brechen, wobei das Verfahren die folgenden Schritte umfasst:
Bereitstellen der luftgeformten Zelluloserohlingstruktur (2) und Anordnen der Zelluloserohlingstruktur (2) zwischen dem ersten Formteil (3) und dem zweiten Formteil (4);
Formen des Zelluloseprodukts (1) durch Zusammenpressen des ersten Formteils (3) und des zweiten Formteils (4) in einem ersten Presshub (S_{P1}) in der Pressrichtung (D_{P}), wobei ein Formdruck (P_{F}) auf die Zelluloserohlingstruktur (2) ausgeübt wird;
Ausschneiden des Zelluloseprodukts (1) aus der Zelluloserohlingstruktur (2) durch Drücken der Schneidkante (5a) in Richtung und in Kontakt mit der Ambossplatte (6) mit einer vorgegebenen Schneidkraft (F_{C});
wobei die Schneidkante (5a) gleichzeitig mit dem ersten Presshub (S_{P1}) in Richtung und in Kontakt mit der Ambossplatte (6) gedrückt wird, oder wobei die Schneidkante (5a) nach Beginn des ersten Presshubs (S_{P1}) in einem zweiten Presshub (S_{P2}) in die Pressrichtung (D_{P}) in Richtung und in Kontakt mit der Ambossplatte (6) gedrückt wird.

14. Verfahren nach Anspruch 13,
wobei der Formdruck (P_{F}) im Bereich von 1-100 MPa, vorzugsweise im Bereich von 4-20 MPa liegt, und
wobei die vorgegebene Schneidkraft (F_{c}) im Bereich von 5-100 N/mm, vorzugsweise im Bereich von 10-50 N/mm liegt.

15. Verfahren nach Anspruch 13 oder 14,
wobei das flexible Schneidelement (5) über ein oder mehrere Federelemente (8) lösbar an dem ersten Formteil (3) befestigt ist, wobei das Verfahren ferner den folgenden Schritt umfasst: Aufbauen der vorgegebenen Schneidkraft (F_{c}) durch das eine oder die mehreren Federelemente (8), wenn die Schneidkante (5a) in Kontakt mit der Ambossplatte (6) gedrückt wird.

## Revendications

1. Système de moule de produit de cellulose par formation à sec (S) pour la formation à sec d'un produit de cellulose (1) à partir d'une structure d'ébauche de cellulose formée par air (2), le système de moule par formation à sec (S) comprenant :
une structure d'ébauche de cellulose formée par air (2) et un produit de cellulose (1) fabriqué à partir de celle-ci ; et
une première partie de moule (3) et une seconde partie de moule opposée (4) configurées pour coopérer l'une avec l'autre dans une direction de pressage (D_{P}) lors de la formation du produit de cellulose (1), la première partie de moule (3) et la seconde partie de moule (4) étant configurées pour être pressées ensemble dans la direction de pressage (D_{P}) lors d'une première course de pressage (S_{P1}) pour appliquer une pression de formation (P_{F}) sur la structure d'ébauche de cellulose (2),
dans lequel un élément de coupe flexible (5) avec un bord de coupe (5a) configuré pour fonctionner dans la direction de pressage (D_{P}) est fixé de manière amovible à la première partie de moule (3), dans lequel la seconde partie de moule (4) comprend une plaque d'enclume (6) agencée pour coopérer avec le bord de coupe (5a) de l'élément de coupe flexible (5), dans lequel l'élément de coupe flexible (5) est fait d'un matériau qui est autorisé à fléchir afin d'adapter la forme de l'élément de coupe flexible (5) à une forme souhaitée, et qui est pliable sans se casser lors de la mise en forme,
dans lequel l'élément de coupe flexible (5) est configuré pour découper le produit de cellulose (1) de la structure d'ébauche de cellulose (2) en pressant le bord de coupe (5a) vers et en contact avec la plaque d'enclume (6) avec une force de coupe prédéterminée (F_{c}), simultanément à la première course de pressage (S_{P1}) ou dans une seconde course de pressage (S_{P2}) dans la direction de pressage (D_{P}) après le début de la première course de pressage (S_{P1}).

2. Système de moule de produit de cellulose par formation à sec (S) selon la revendication 1,
dans lequel le bord de coupe (5a) a une extension et une forme dans un premier plan (P1) perpendiculaire à la direction de pressage (D_{P}) correspondant à un bord périphérique extérieur (1a) du produit de cellulose (1).

3. Système de moule de produit de cellulose par formation à sec (S) selon la revendication 1 ou 2,
dans lequel l'élément de coupe flexible (5) a une configuration avec une section structurelle dans une direction latérale (D_{LA}), ou deux ou plusieurs sections structurelles (5) disposées en connexion les unes avec les autres dans une direction latérale (D_{LA}), dans lequel la direction latérale (D_{LA}) est perpendiculaire à la direction de pression (D_{P}).

4. Système de moule de produit de cellulose par formation à sec (S) selon l'une quelconque des revendications précédentes,
dans lequel l'élément de coupe flexible (5) est disposé de manière mobile dans la direction de pressage (D_{P}) par rapport à la première partie de moule (3).

5. Système de moule de produit de cellulose par formation à sec (S) selon l'une quelconque des revendications précédentes,
dans lequel l'élément de coupe flexible (5) s'étend le long d'une section de bord périphérique externe de la première partie de moule (3).

6. Système de moule de produit de cellulose par formation à sec (S) selon l'une quelconque des revendications 1 à 4,
dans lequel l'élément de coupe flexible (5) est disposé dans une rainure (3b) de la première partie de moule (3), dans lequel la rainure (3b) a une extension dans la direction de pressage (D_{P}) et comprend une ouverture de rainure (3c) faisant face à la seconde partie de moule (4).

7. Système de moule de produit de cellulose par formation à sec (S) selon l'une quelconque des revendications précédentes,
dans lequel l'élément de coupe flexible (5) est fixé de manière amovible à la première partie de moule (3) au moyen d'un ou plusieurs éléments de fixation (7).

8. Système de moule de produit de cellulose par formation à sec (S) selon l'une quelconque des revendications précédentes,
dans lequel l'élément de coupe flexible (5) est fixé de manière amovible à la première partie de moule (3) via un ou plusieurs éléments à ressort (8).

9. Système de moule de produit de cellulose par formation à sec (S) selon l'une quelconque des revendications précédentes,
dans lequel la plaque d'enclume (6) comprend un matériau plus mou que le bord de coupe (5a).

10. Système de moule de produit de cellulose par formation à sec (S) selon l'une quelconque des revendications précédentes,
dans lequel la seconde partie de moule (4) comprend un élément à ressort (10) configuré pour supporter la plaque d'enclume (6), dans lequel la plaque d'enclume (6) est disposée de manière mobile dans la direction de pression (D_{P}) par rapport à la seconde partie de moule (4).

11. Système de moule de produit de cellulose par formation à sec (S) selon l'une quelconque des revendications précédentes,
dans lequel la seconde partie de moule (4) comprend un élément à ressort (11) configuré pour supporter la seconde partie de moule (4), dans lequel la seconde partie de moule (4) est disposée de manière mobile dans la direction de pression (DP).

12. Système de moule de produit de cellulose par formation à sec (S) selon l'une quelconque des revendications précédentes,
dans lequel l'élément de coupe flexible (5) comprend une partie de bord (5b) opposée au bord de coupe (5a), dans lequel la première partie de moule (3) comprend une plaque de support (3d) avec une structure de matériau déformable (12) reliée à la partie de bord (5b).

13. Procédé de formation à sec d'un produit de cellulose (1) dans un système de moule à sec (S) à partir d'une structure d'ébauche de cellulose formée par air (2), dans lequel le système de moule à sec (S) comprend une première partie de moule (3) et une seconde partie de moule opposée (4) conçues pour coopérer dans une direction de pressage (D_{P}) lors de la formation du produit de cellulose (1), dans lequel un élément de coupe flexible (5) doté d'un bord de coupe (5a) agissant dans la direction de pressage (D_{P}) est fixé de manière amovible à la première partie de moule (3), dans lequel la seconde partie de moule (4) comprend une plaque d'enclume (6) conçue pour coopérer avec le bord de coupe (5a) de l'élément de coupe flexible (5), dans lequel l'élément de coupe flexible (5) est constitué d'un matériau flexible pour s'adapter à la forme souhaitée, et qui est pliable sans se rompre lors de la formation, le procédé comprenant les étapes consistant à :
fournir la structure d'ébauche de cellulose formée par air (2) et disposer la structure d'ébauche de cellulose (2) entre la première partie de moule (3) et la seconde partie de moule (4) ;
former le produit de cellulose (1) en pressant ensemble la première partie de moule (3) et la seconde partie de moule (4) dans une première course de pressage (S_{P}) dans la direction de pressage (D_{P}), une pression de formation (PF) étant appliquée sur la structure d'ébauche de cellulose (2) ;
découper le produit de cellulose (1) à partir de la structure d'ébauche de cellulose (2) en pressant le bord de coupe (5a) vers et en contact avec la plaque d'enclume (6) avec une force de coupe prédéterminée (F_{C}) ;
dans lequel le bord de coupe (5a) est pressé vers et en contact avec la plaque d'enclume (6) simultanément avec la première course de pressage (S_{P1}), ou dans lequel le bord de coupe (5a) est pressé vers et en contact avec la plaque d'enclume (6) dans une seconde course de pressage (S_{P2}) dans la direction de pressage (D_{P}) après le début de la première course de pressage (S_{P1}).

14. Procédé selon la revendication 13,
dans lequel la pression de formation (P_{F}) est comprise entre 1 et 100 MPa, de préférence entre 4 et 20 MPa, et
dans lequel la force de coupe prédéterminée (F_{C}) est comprise entre 5 et 100 N/mm, de préférence entre 10 et 50 *N*/*mm.*

15. Procédé selon la revendication 13 ou 14,
dans lequel l'élément de coupe flexible (5) est fixé de manière amovible à la première partie de moule (3) par l'intermédiaire d'un ou plusieurs éléments à ressort (8), dans lequel le procédé comprend en outre l'étape consistant à : établir la force de coupe prédéterminée (FC) par les un ou plusieurs éléments à ressort (8) lors du pressage du bord de coupe (5a) en contact avec la plaque d'enclume (6).
